# EUROPÄISCHE PATENTSCHRIFT

(11) **EP 3 378 605 B1**
(45) Veröffentlichungstag und Bekanntmachung des Hinweises auf die Patenterteilung: **30.10.2019**
(21) Anmeldenummer: 17162660.9
(22) Anmeldetag: 23.03.2017
(51) Int. Cl.: B25J 5/02, E01B 23/02

(54) **ROBOTERSYSTEM MIT TRAGSCHIENE UND ROBOTERPLATTFORM**
ROBOT SYSTEM WITH SUPPORT RAIL AND ROBOTIC PLATFORM
SYSTÈME DE ROBOT AVEC RAIL PORTEUR ET PLATE-FORME ROBOTIQUE

(43) Veröffentlichungstag der Anmeldung: 26.09.2018
(73) Patentinhaber: IPR-Intelligente Peripherien für Roboter GmbH, 75031 Eppingen (DE)
(72) Erfinder: DOLL, Fredy, 77855 Achern (DE); KOLLMAR, Thomas, 74223 Flein (DE); STRACK, Joachim, 77855 Achern (DE)
(74) Vertreter: Patentanwaltskanzlei Cartagena

(56) Entgegenhaltungen:
- BE-A- 495 085
- CN-A- 105 179 474
- DE-U1- 20 215 204
- FR-A- 1 425 444

## Beschreibung

### ANWENDUNGSGEBIET UND STAND DER TECHNIK

Die Erfindung betrifft ein Robotersystem mit einer auf einer Tragschiene verfahrbaren Roboterplattform, auf der ein Roboter angebracht ist nach dem Oberbegriff von Anspruch 1. Darüber hinaus betrifft die Erfindung Verfahren zur Herstellung einer Tragschiene für ein erfindungsgemäßes Robotersystem.

Die genannten Tragschienen für Robotersysteme sind aus dem Stand der Technik allgemein bekannt. Diese Tragschienen, die mitunter auch als siebte Achse oder Fahrachse bezeichnet werden, dienen dem Zweck, mittels der darauf translativ verfahrbar angebrachten Roboterplattform einen herkömmlichen Industrieroboter horizontal translativ zu verfahren. Den Bedarf hierfür gibt es in vielen industriellen Anwendungsfeldern, beispielsweise in der Fertigung, wenn der Roboter an verschiedenen Stellen eingesetzt werden soll, oder in Fällen, in denen der Roboter bestimmungsgemäß selbst ein Werkstücklager anfahren können soll, um dort ein zu verbauendes Werkstück zu ergreifen.

Gattungsgemäße Tragschienen werden üblicherweise mittels eines bodenseitigen Anschlussflansches auf einem Untergrund befestigt, insbesondere auf einem Hallenboden. An ihrer Oberseite weisen sie üblicherweise zwei zueinander beabstandete parallel verlaufende Führungsschienen auf, auf denen Räder der verfahrbaren Roboterplattform abrollen.

Bekannte Tragschienen sind als vollständig metallische Tragschienen, meist aus Aluminium oder Stahl, ausgebildet. Dies führt zu einem vergleichsweise hohen Preis der Tragschienen.

Aus der DE 20215204 U1 und der BE 495085 A sind Schienen für den Schienenverkehr bekannt. Die DE 20215204 U1 schlägt vor, die eigentliche Schiene auf einer rahmenartigen Längsschwelleneinheit angebracht wird, die paarweise angeordnete Stahlbetonbalken aufweist. Die BE 495085 A beschreibt eine Schienenanordnung, bei der je Seite zwei Einzelschienen, eine Rippe und eine Rollschiene angeordnet sind. Zwischen diesen wird vor Ort ein Betonelement gegossen. CN 105179474 A offenbart ein gattungsgemäßes Robotersystem umfassend ein Verfahrsystem mit einer Tragschiene und einem entlang dieser verfahrbaren, auf einer Roboterplattform angebrachter Roboter gemäß dem Oberbegriff des Anspruchs 1.

### AUFGABE UND LÖSUNG

Aufgabe der Erfindung ist es, ein Robotersystem mitsamt einem für seine Tragschiene geeigneten Herstellungsverfahren zur Verfügung zu stellen, mittels derer Tragschienen bei guten Eigenschaften im Betrieb günstiger als bisher herstellbar ist.

Ein erfindungsgemäßes Robotersystem umfasst ein Verfahrsystem mit einer Tragschiene und einer entlang der Haupterstreckungsrichtung der Tragschiene verfahrbare Roboterplattform auf der ein Roboter angebracht ist.

Die Tragschiene des erfindungsgemäßen Robotersystems ist in Art eines in einer Haupterstreckungsrichtung ausgerichteten länglichen Bauelements mit mindestens einer an der Außenseite vorgesehenen und in Haupterstreckungsrichtung erstreckten metallischen Führungsschiene zur Führung der Roboterplattform ausgebildet.

Die Tragschiene weist in einem nach unten weisenden Teilabschnitt mindestens einen unteren metallischen Anschlussflansch zur Befestigung der Tragschiene auf einem Untergrund, wie einem Hallenboden, auf. In einem nach oben weisenden Teilabschnitt weist die Tragschiene an einer nach oben oder zur Seite ausgerichteten Außenseite mindestens einen oberen metallischen Anschlussflansch zur Anbringung der metallischen Führungsschiene und/oder unmittelbar die mindestens eine metallische Führungsschiene auf.

Erfindungsgemäß verfügt die Tragschiene über eine Tragstruktur aus Beton, an deren Außenseite der mindestens eine untere metallische Anschlussflansch sowie der mindestens eine obere Anschlussflansch bzw. die Führungsschiene angebracht sind. Dabei sind der obere metallische Anschlussflansch, der untere metallische Anschlussflansch und/oder die Führungsschiene an der Tragstruktur aus Beton befestigt, insbesondere mittels formschlüssig in die Tragstruktur aus Beton eingreifender Zuganker und/oder mittels eines von der Tragstruktur umgebenen verbindenden Innengerüsts.

Bei einer Tragschiene des erfindungsgemäßen Robotersystems ist somit vorgesehen, dass diese eine den überwiegenden Teil der Tragschiene bildende Tragstruktur aus Beton aufweist, wobei grundsätzlich klassischer Zementbeton ebenso wie Polymerbeton verwendet werden kann. Von besonderem Vorteil ist aufgrund der großen Lasten und Momente, die auf eine gattungsgemäße Tragschiene wirken, die Verwendung eines ultrahochfesten Betons (UHPC/UHFB). Solche Betonsorten zeichnen sich dadurch aus, dass sie auch vergleichsweise gut auf Zug belastbar sind, was im Kontext der vorliegenden Erfindung eine Rolle spielt. Je nach zu erwartenden Belastungen und Bewehrungsmitteln im Beton ist ein solcher ultrahochfester Beton jedoch zwingend erforderlich.

Die Tragstruktur aus Beton erstreckt sich als einheitliche Tragstruktur über die gesamte Länge der Tragschiene und wird lediglich je nach Ausgestaltung stirnendseitig durch einen im Weiteren noch erläuterten Anschlussflansch abgeschlossen. Die Bestandteile der Tragschiene, die zur Befestigung derselben an einem Hallenboden oder zur Führung der Roboterplattform dienen, sind auch bei einer Tragschiene des erfindungsgemäßen Robotersystems aus Metall hergestellt, insbesondere aus Stahl oder Aluminium. Hierzu gehört zunächst der untere Anschlussflansch, der insbesondere in Form einer Bodenplatte, also einer Struktur mit ebener Unterseite zur Auflage auf einem Hallenboden, ausgestaltet sein kann. Weiterhin sind auch die Führungsschiene und gegebenenfalls ein oberer Anschlussflansch zur Anbringung der Führungsschiene metallisch ausgebildet.

Für die Anbindung dieser metallischen Komponenten an die Tragstruktur aus Beton sind die beiden bereits genannten Wege erfindungsgemäß vorgesehen. Bei einer Gestaltung mit Innengerüst ist vorgesehen, dass der untere Anschlussflansch, insbesondere also die Bodenplatte, mit dem oberen Anschlussflansch zur Anbringung der Führungsschiene oder der Führungsschiene selbst über ein Innengerüst verbunden ist. Bei diesem Innengerüst handelt es sich im einfachsten Fall um metallische Stäbe, die auf Seiten des unteren Anschlussflansches und des oberen Anschlussflansches bzw. der Führungsschiene befestigt sind, insbesondere mittels Schweißverbindungen. Das Innengerüst ist vollständig von der Tragstruktur umgeben. Es dient insbesondere dem Zweck, Zugkräfte im Falle starker auf die Roboterplattform wirkender Momente aufzunehmen, da Beton als Werkstoff hierfür nur bedingt geeignet ist. Dadurch wirkt der oben und unten am Innengerüst vorgesehene Anschlussflansch jeweils quasi als formschlüssige Sicherung gegenüber auf der Gegenseite eingeleiteten Zugkräften. An der Tragstruktur aus Beton werden Zugbelastungen dadurch teilweise oder vollständig vermieden.

Allerdings ist das Vorsehen dieses Innengerüstes nicht alternativlos. Bei der Wahl einer Betonsorte, die in ausreichendem Maße zugkraftstabil ist, kann auf die unmittelbare metallische Verbindung zwischen dem unteren Anschlussflansch einerseits und dem oberen Anschlussflansch und der der Führungsschiene andererseits mittels des Innengerüsts zugunsten von Zugankern verzichtet werden, die vom Beton umgossen werden, so dass sie einen formschlüssigen Halt bieten. Bei den Zugankern handelt es sich um angeschraubte, angeschweißte oder anderweitig verbundene metallische Strukturen, die in die Tragstruktur aus Beton hineinragen und sich dort bezogen auf eine zu befürchtende Trennungsrichtung aufweiten.

Die oberen Anschlussflansche bzw. die Führungsschienen sind üblicherweise als in Haupterstreckungsrichtung ausgerichtete Profile ausgebildet. Es hat sich daher als besonders vorteilhaft erwiesen, die dortigen zumindest teilweise durch in Haupterstreckungsrichtung erstreckten Strangprofile zu bilden, insbesondere durch I-Profile oder T-Profile, wobei insbesondere vorzugsweise an einem Anschlussflansch oder einer Führungsschiene mehrere solche durch Strangprofile gebildete Zuganker in Haupterstreckungsrichtung beabstandet zueinander angebracht sind und/oder Entlüftungsbohrungen im Strangprofil vorgesehen sind. Vorteilhaft ist es auch, mehrere solche Zuganker am selben Anschlussflansch bzw. derselben Führungsschiene mit unterschiedlichen Ausrichtungen in die Tragstruktur ragen zu lassen, um in unterschiedliche Ausrichtungen wirkende Zugkräfte optimal aufnehmen zu können.

Die erfindungsgemäße Verwendung von Beton hat sich in mehrfacher Hinsicht als positiv herausgestellt. Zum einen sinken die Herstellungskosten für eine Tragschiene des erfindungsgemäßen Robotersystems gegenüber einer vollständig metallischen Gestaltung in erheblichem Maße.

Zum anderen haben sich auch die Dämpfungseigenschaften einer solchen Tragschiene als vorteilhaft herausgestellt. Der Beton bewirkt eine Dämpfung, durch die Erschütterungen in der Umgebung des Roboters nur in geringerem Maße die Positioniergenauigkeit des Roboters negativ beeinflussen.

Darüber hinaus bietet die erfindungsgemäße Gestaltung logistische Vorteile. So kann bei einem Export solcher Tragschienen nach Übersee beispielsweise darauf verzichtet werden, die Tragstruktur selbst zu transportieren, da diese häufig auch vor Ort herstellbar ist.

Mindestens einer der Anschlussflansche oder die Führungsschiene liegt vorzugsweise durch Angießen des Betons an die betreffende Komponente oder partiellem Umgießen der betreffenden Komponente unmittelbar bündig an der Tragstruktur aus Beton an.

Die Tragschiene des erfindungsgemäßen Robotersystems, die aus der Tragstruktur aus Beton und anderen Komponenten aus Metall besteht, kann zwar grundsätzlich in im Weiteren noch erläuterter Weise derart hergestellt sein, dass die Tragstruktur isoliert gegossen wird und erst anschließend mit den metallischen Bauteilen versehen wird, so dass ein unmittelbar bündiges Anliegen im hier gemeinten Sinne nicht gegeben ist. Bevorzugt wird jedoch, dass die Anschlussflansche bzw. die Führungsschienen bereits beim Gießen des Betons in die Schalung eingebracht sind und hierdurch der unmittelbar bündige Aufbau entsteht und hierdurch eine vergleichsweise feste Verbindung mit dem Beton bereits ohne Berücksichtigung der Zuganker bzw. des Innengerüsts erreicht wird. Hierdurch entfallen auch nachfolgende Montageschritte und eine vergleichsweise genaue Positionierung der eingegossenen bzw. partiell umgossenen Komponenten wird möglich.

Vorzugsweise wird der mindestens eine untere metallische Anschlussflansch durch mindestens eine Bodenplatte, also einen Metallkörper mit großflächiger Auflagefläche, gebildet, welche Bohrungen zur Anbringung am Untergrund aufweist, wobei vorzugsweise eine Mehrzahl von zueinander beanstandeten Bodenplatten vorgesehen ist.

Der Anschlussflansch kann jedoch auch mindestens eine Gewindebohrung zur Anbringung einer Bodenplatte aufweisen, wobei vorzugsweise an einem oder mehreren unteren Anschlussflanschen eine Mehrzahl von Gewindebohrungen zur Anbringung einer oder einer Mehrzahl von Bodenplatten vorgesehen ist.

Zur Führung der Roboterplattform sind üblicherweise zwei Führungsschienen vorgesehen, die ausreichend weit beabstandet sind, um Kippmomente auf die Roboterplattform sicher aufnehmen zu können.

Eine mögliche Gestaltung der Tragschiene des erfindungsgemäßen Robotersystems sieht vor, dass die beiden Schienen Teil einer gemeinsamen metallischen Schienenplatte sind, die die vollständige Oberseite der Tragstruktur aus Beton abdecken. Vorzugsweise sind mindestens zwei getrennte obere metallische Anschlussflansche an der Außenseite der Tragstruktur vorgesehen, die jeweils zur Anbringung einer der Führungsschienen vorgesehen sind und die jeweils eigene Zuganker aufweisen oder jeweils separat mit dem von der Tragstruktur umgebenen Innengerüst verbunden sind.

Alternativ können auch mindestens zwei getrennte Führungsschienen jeweils unmittelbar an der Außenseite der Tragstruktur vorgesehen sein und mit jeweils eigenem Zuganker ausgestattet sein oder jeweils separat mit dem von der Tragstruktur umgebenen Innengerüst verbunden sein.

Durch die Verwendung zweier getrennter Führungsschienen wird erreicht, dass die Kosten gegenüber einer vergleichsweise großen Struktur mit zwei integrierten Führungsschienen reduziert sind. Darüber hinaus gestatten es zwei getrennte Führungsschienen, baugleich Verwendung zu finden bei Tragschienen mit unterschiedlicher Formgebung der Oberfläche der Tragstruktur an einer Oberseite der Tragschiene oder unterschiedlichen Spurweiten. Je nach Typ des Verfahrsystems ist vorgesehen, dass eine Mulde an der Oberseite der Tragschiene vorgesehen ist, in der ein Kabelstrang geführt ist. Die Verwendung zweier getrennter metallischer Führungsschienen bzw. zweier getrennter oberer Anschlussflansche zur Anbringung jeweils einer Führungsschiene gestattet es, diese Bauteile unverändert zu verwenden, ungeachtet der Frage, ob die Tragschiene mit einer solchen Mulde oder ohne eine solche Mulde ausgebildet sein soll. Der Bereich zwischen den beiden Führungsschienen bzw. oberen Anschlussflanschen ist bei einer nicht einstückigen Gestaltung durch Teile der Tragstruktur aus Beton gebildet.

Zusätzlich zu den genannten Anschlussflanschen ist vorzugsweise an mindestens einem Stirnende der Tragschiene ein weiterer metallischer Anschlussflansch zum Zwecke der Ankopplung einer weiteren Tragschiene und/oder zur Anbringung eines Endanschlags für die Roboterplattform vorgesehen. Dieser weitere metallische Anschlussflansch ist vorzugsweise über das Innengerüst mit dem unteren metallischen Anschlussflansch und/oder dem oberen metallischen Anschlussflansch bzw. der Führungsschiene verbunden.

Der genannte zusätzliche Anschlussflansch kann insbesondere einem von zwei Zwecken dienen. Zum einen gestattet es ein solcher Anschlussflansch, mit einem entsprechenden Anschlussflansch einer zweiten Tragschiene verbunden zu werden, um einen längeren Verfahrweg für die Roboterplattform zu ermöglichen. Tragschienen des erfindungsgemäßen Robotersystems weisen üblicherweise eine Länge von mindestens 3 m auf, insbesondere eine Länge zwischen 4 und 10 m. Längere Verfahrwege werden üblicherweise durch die Verwendung mehrerer gekoppelter Tragschienen erreicht, wobei der genannte metallische Anschlussflansch am Stirnende der Tragschiene es gestattet, zwei Tragschienen auf sehr einfache und präzise Weise miteinander zu koppeln. Im Falle einer solchen Kopplung mehrerer Tragschienen sind vorzugsweise Führungsschienen überlappend an den oberen Anschlussflanschen angebracht.

Wie die bereits genannten Anschlussflansche an der Unterseite und der Oberseite der Tragschiene ist auch der stirnseitige Anschlussflansch vorzugsweise entweder über einen in die Tragstruktur eingreifenden Zuganker oder über eine Anbindung an das Innengerüst metallisch mit den genannten anderen Komponenten verbunden. Eine besonders vorteilhafte Gestaltung sieht vor, dass der stirnseitige Anschlussflansch unmittelbar an den oberen Anschlussflansch oder die beiden oberen Anschlussflansche angebracht, insbesondere angeschweißt, ist. Zusätzlich kann es von Vorteil sein, ihn auch unmittelbar oder über Verbindungssegmente metallisch an den unteren Anschlussflansch anzubinden.

Neben der Anbringung einer weiteren Führungsschiene kann der gleiche endseitige metallische Anschlussflansch auch benutzt werden, um hier einen Endanschlag anzubringen, der in Art eines Prellbocks den Verfahrweg der Roboterplattform begrenzt. Insbesondere wenn dies vorgesehen ist, ist die Anbringung des stirnseitigen Anschlussflansches unmittelbar an den oberen Anschlussflanschen oder den Führungsschienen zweckmäßig.

Wenn im Einzelfall keine Flexibilität benötigt wird, kann statt des metallischen Anschlussflansches, an dem der Endanschlag befestigt, beispielsweise verschraubt, wird, auch unmittelbar ein Endanschlag in gleicher Weise an der Tragstruktur angebracht sein, also durch Anbindung, Verschweißung oder Verschraubung, an das Innengerüst oder mittels Zuganker.

Grundsätzlich kann der untere metallische Anschlussflansch, der vorzugsweise als Bodenplatte ausgebildet ist, in Form einer einzigen durchgehenden Bodenplatte gestaltet sein. Vorzugsweise sind jedoch mehrere untere metallische Anschlussflansche an der Unterseite der Tragschiene vorgesehen, die insbesondere in Art von Bodenplatten ausgebildet sind. Diese mehreren Anschlussflansche können an einem gemeinsamen Innengerüst angebracht sein oder mittels voneinander getrennter Teilabschnitte des Innengerüsts an der gemeinsamen Führungsschiene oder einem gemeinsamen oberen metallischen Anschlussflansch angebracht sein.

Die Verwendung mehrerer voneinander beabstandeter Bodenplatten ist insbesondere aufgrund der bevorzugten Art der Fertigung von Vorteil, da die Bereiche zwischen den Bodenplatten das Zuführen des flüssigen Betons gestatten. Zudem ist eine durchgehende Bodenplatte in der Regel nicht erforderlich, so dass durch die mehreren unteren metallischen Anschlussflansche, insbesondere Bodenplatten, die Gesamtkosten gesenkt werden können. Bei einer Gestaltung, bei der ein Innengerüst verwendet wird, mittels dessen die unteren Anschlussflansche/Bodenplatten metallisch mit den Führungsschienen bzw. den oberen Anschlussflanschen für die Führungsschienen verbunden sind, sind zwei Gestaltungen denkbar. Zum einen kann ein einheitliches Innengerüst vorgesehen sein, an dem alle unteren Anschlussflansche/Bodenplatten angebracht sind. Bevorzugt wird jedoch eine Gestaltung, bei der die unteren Anschlussflansche jeweils über die genannten voneinander getrennten Teilabschnitte, im einfachsten Fall in etwa vertikal erstreckte Metallstreben, mit dem einen oder den mehreren oberen Anschlussflanschen bzw. den dortigen Führungsschienen verbunden sind.

Vorzugsweise ist das metallische Innengerüst mit mindestens einem der Anschlussflansche oder der Führungsschiene durch eine Schweißverbindung verbunden. Alternativ oder auch zusätzlich zu den Schweißverbindungen kann das metallische Innengerüst mit mindestens einem der Anschlussflansche oder der Führungsschiene durch eine Gewindeverbindung verbunden sein. Gleiches gilt auch für die Zuganker.

Die Verbindung des Innengerüstes mit einem der Anschlussflansche oder den Führungsschienen durch eine Gewindeverbindung wird insbesondere dann als vorteilhaft angesehen, wenn der grundsätzlich nicht bevorzugte Weg der Fertigung gewählt wird, bei der die Tragstruktur aus Beton zunächst ohne metallische Anschlussflansche hergestellt wird und erst dann anschließend mit jenen versehen wird.

Da die Tragschiene des erfindungsgemäßen Robotersystems aufgrund des Betons vergleichsweise schwer ist, kann es von Vorteil sein, wenn zur Verminderung der Masse durch eine entsprechend ausgestaltete Schalung beim Gießen Freibereiche verbleiben, die nicht mit Beton ausgegossen werden. Statt dies über die Formgebung der Schalung zu erzielen, kann es einfacher sein, Kunststoffblöcke, insbesondere Polystyrol/Styropor-Blöcke, in die Tragstruktur einzubetten. Dies ist insbesondere auch deswegen zweckmäßig, da die höchste Belastung an der Tragstruktur insbesondere unterhalb der Führungsschienen zu erwarten ist. Ein Bereich zwischen zwei Führungsschienen ist jedoch weniger belastet, so dass hier die genannten Blöcke zweckmäßigerweise untergebracht werden können. Um die vergleichsweise schweren Tragschienen des erfindungsgemäßen Robotersystems transportieren zu können, kann es von Vorteil sein, wenn quer zur Haupterstreckungsrichtung Durchgangskanäle in der Tragstruktur vorgesehen sind, durch die Transportseile oder Transportstangen zum Zwecke des Transports geführt werden können. Damit der Beton hierbei nicht beschädigt wird, ist es von besonderem Vorteil, wenn Hohlprofile bzw. Rohre aus Kunststoff oder Metall diese Durchgangskanäle auskleiden. Diese Hohlprofile werden vorzugsweise bereits zum Zeitpunkt des Gießens der Tragstruktur aus Beton in die Schalung eingebracht und halten somit die Durchgangskanäle offen. Weiterhin wird es als vorteilhaft angesehen, wenn in der im Betonbau üblichen Art und Weise Bewehrungsstangen oder andere Bewehrungsmittel in die Tragstruktur aus Beton eingelegt werden. Insbesondere vorzugsweise können Bewehrungsstangen sich in Haupterstreckungsrichtung der Tragschiene erstrecken. Bei der Verwendung von hochfestem Zementbeton oder Polymerbeton kann gegebenenfalls auch auf eine solche Bewehrung verzichtet werden.

Grundsätzlich wird es als unproblematisch angesehen, wenn die Außenoberfläche der Tragstruktur aus Beton auch unmittelbar und ohne weitere Nachbearbeitung die Außenfläche der Tragschiene bildet. Um hier jedoch Abrieb zu vermeiden, können mehrere denkbare Maßnahmen getroffen werden. So ist es beispielsweise möglich, die Oberfläche der Tragstruktur zumindest abschnittsweise zu schleifen, um hier den späteren Abrieb zu vermindern. Auch eine Beschichtung kann auf dem Beton aufgebracht werden, die den Abrieb vermindert. Im Extremfall ist es sogar denkbar, die Tragstruktur aus Beton vollständig von einer beispielsweise aus Kunststoff bestehenden Schutzschicht zu ummanteln. Hierdurch kann auch die ästhetische Anmutung der Tragschiene gegebenenfalls positiv beeinflusst werden.

Ein erfindungsgemäßes Robotersystem weist ein Verfahrsystem auf, das mindestens eine Tragschiene mit mindestens einer daran vorgesehenen Führungsschiene nach oben beschriebener Art sowie mindestens eine Roboterplattform aufweist, auf der ein Roboter angeordnet ist.

Wie eingangs bereits erläutert, verfügt die Roboterplattform vorzugsweise über Räder, die auf den Führungsschienen der Tragschiene geführt sind. Die Verlagerung der Roboterplattform erfolgt üblicherweise mittels eines Motors an der Roboterplattform, der mit einer Zahnstange zusammenwirkt. Diese Zahnstange ist vorzugsweise gemeinsam mit der Führungsschiene an einem oberen Anschlussflansch der Tragschiene angebracht. Üblicherweise ist weiterhin ein Kabelstrang vorgesehen, der von außen zur translativ beweglichen Roboterplattform geführt ist und der elektrische, pneumatische und hydraulische Leitungen enthalten kann sowie gegebenenfalls auch die Zuführung von Verbrauchsmaterialien ermöglicht. Dieser Strang ist bei einem erfindungsgemäßen Verfahrsystem insbesondere vorzugsweise zentrisch zwischen zwei Führungsschienen vorgesehen, so dass er dort in einer durch die Tragstruktur gebildeten Mulde geführt ist. Bei anderen Gestaltungen ist der Leitungsstrang jedoch seitlich neben der Führungsschiene geführt.

Die Erfindung betrifft darüber hinaus auch Verfahren zur Herstellung der beschriebenen Tragschiene.

Bei einer ersten Variante ist vorgesehen, dass zunächst eine Metallstruktur erstellt wird, die ein Innengerüst und mindestens einen unteren metallischen Anschlussflansch sowie mindestens einen oberen metallischen Anschlussflansch bzw. eine Führungsschiene umfasst, wobei diese mindestens zwei Teile vorzugsweise mit dem Innengerüst verschweißt sind. Diese Metallstruktur wird in eine Schalung eingelegt und diese dann anschließend mit Beton ausgegossen, so dass hierdurch die Tragstruktur gebildet wird, wobei das Innengerüst zumindest abschnittsweise vom Beton umgeben ist und wobei der mindestens eine Anschlussflansch bzw. die Führungsschiene zumindest abschnittsweise außerhalb einer Oberfläche der Tragstruktur angeordnet ist.

Diese Variante stellt die bevorzugte Variante zur Herstellung einer erfindungsgemäßen Tragschiene dar. Durch das Innengerüst, welches die unteren Anschlussflansche und die oberen Anschlussflansche bzw. Führungsschienen vereint, ist deren Relativanordnung zueinander bereits weitgehend festgelegt. Durch das Einbringen des Betons wird ein sehr belastbarer Verbund geschaffen.

Bei einer zweiten Variante ist vorgesehen, dass mindestens ein unterer metallischer Anschlussflansch und mindestens ein oberer metallischer Anschlussflansch oder eine Führungsschiene in einem Außenbereich in die Schalung eingelegt werden, wobei mindestens ein Zuganker je Anschlussflansch oder Führungsschiene in einen Innenraum der Schalung hineinragt. Anschließend wird die Schalung mit Beton ausgegossen, so dass hierdurch die Tragstruktur gebildet wird, wobei die Zuganker derart mit Beton umgeben werden, dass sie formschlüssig einer Trennung von der Tragstruktur entgegenwirken, und wobei mindestens ein Anschlussflansch bzw. die Führungsschiene zumindest abschnittsweise außerhalb einer Oberfläche der Tragstruktur angeordnet ist.

Bei dieser Variante des Verfahrens müssen die einzelnen Anschlussflansche bzw. Führungsschienen einzeln in der Schalung positioniert werden, was gegenüber der ersten Variante des Verfahrens die Gefahr einer Positionsungenauigkeit etwas erhöht. Bei diesem Verfahren ist insbesondere darauf zu achten, dass im Bereich der bestimmungsgemäß formschlussbildenden Zuganker eine Entlüftung möglich bleibt. Dies wird insbesondere durch die eingangs bereits genannten aus Profilen gebildeten Zugankerabschnitte erzielt. Stattdessen könnten die Profile, die die Zuganker bilden, auch durchgehend ausgebildet sein. In diesem Fall wären vorzugsweise Entlüftungsdurchbrechungen in den Profilen vorzusehen.

Bei einer dritten Variante wird ein die Tragstruktur bildender Betonkörper in einer Schaltung gegossen, in dem bereits beim Gießen Durchgangslöcher für das Innengerüst freigehalten werden oder nach dem Gießen Durchgangslöcher eingebracht werden. Das Innengerüst wird erst anschließend in die Durchgangslöcher eingeschoben und verbindet an gegenüberliegenden Enden angebrachte Anschlussflansche bzw. mindestens einen Anschlussflansch und eine Führungsschiene.

Diese dritte Variante des Verfahrens wird tendenziell als nachteilig angesehen, da die sehr enge Verbindung zwischen den metallischen Anschlussflanschen und der Tragstruktur aus Beton hier nicht in gleicher Weise erzielt wird. Die Möglichkeit, die Tragstruktur und die Anschlussflansche getrennt herzustellen und erst später zu einer Tragschiene zu vereinen, kann jedoch logistisch von Vorteil sein.

Vorzugsweise ist vorgesehen, dass die Außenflächen der Tragstruktur zumindest teilweise geschliffen und/oder mit einer Beschichtung versehen werden.

Die noch unfertige Tragschiene, umfassend die Tragstruktur sowie die Anschlussflansche wird vorzugsweise im Bereich mindestens eines Anschlussflansches bzw. der Führungsschiene spanend nachbearbeitet, insbesondere mittels einer Schleifbearbeitung und/oder eine Bohrbearbeitung.

Obwohl es grundsätzlich möglich ist, die Anschlussflansche in Hinblick auf ihre nach außen weisenden Flächen und Bohrungen bereits vor der Verbindung mit der Tragstruktur zu bearbeiten, wird das beschriebene Verfahren mit Nachbearbeitung in Hinblick auf die Genauigkeit als vorteilhaft angesehen. Dadurch, dass nach Umgeben des Innengerüsts bzw. der Zuganker mit der Tragstruktur aus Beton die spanende Bearbeitung stattfindet, also beispielsweise die Einbringung von Bohrungen und das Schleifen von Kontaktflächen, wird eine hohe Genauigkeit erzielt. Allerdings ist es hierfür erforderlich, dass die noch unfertige Tragschiene trotz ihrer Maße und ihrer Masse in ein geeignetes Bearbeitungszentrum zur spanenden Bearbeitung eingesetzt wird.

Besonders bevorzugt ist es, wenn während des Gießens der Tragstruktur die oberen Anschlussflansche bzw. die Führungsschienen nach unten und die unteren Anschlussflansche nach oben weisen. Da bei einer erfindungsgemäßen Tragschiene insbesondere die Präzision der nach oben weisenden Oberflächen von Relevanz ist, während die zum Hallenboden hin weisenden Oberflächen nachrangig sind, hat es sich als vorteilhaft herausgestellt, die genannte Überkopflage während des Gießens der Tragstruktur vorzusehen.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind.
Fig. 1 zeigt ein erfindungsgemäßes Robotersystem mit einem Verfahrsystem mit Roboterplattform, auf der ein Roboter angebracht ist.
Fig. 2 zeigt in isolierter Darstellung eine Tragschiene des Robotersystems gemäß Fig. 1.
Fig. 3 bis 5 zeigen eine erste Variante des Aufbaus derTragschiene der Figur 2.
Fig. 6 bis 8 zeigen eine zweite Variante des Aufbaus der Tragschiene der Figur 2.
Fig. 9 bis 12 zeigen verschiedene Variationen zu den Varianten der vorherigen Figuren.
Fig. 13A bis 13D zeigen ein Verfahren zur Herstellung einer Tragschiene.

### DETAILLIERTE BESCHREIBUNG DER AUSFÜHRUNGSBEISPIELE

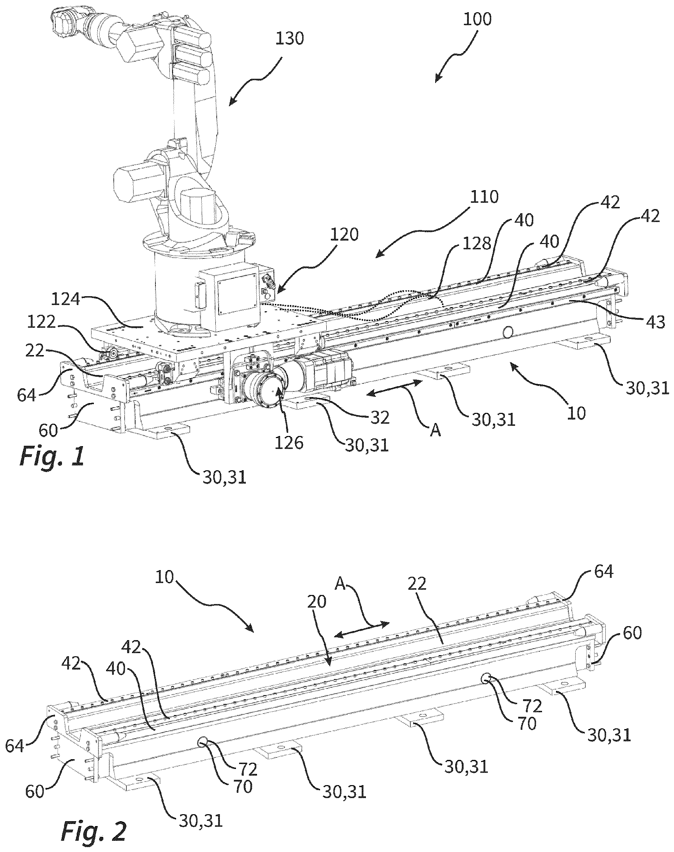

Fig. 1 zeigt ein erfindungsgemäßes Robotersystem 100, welches insbesondere im Rahmen der Fertigung eingesetzt werden kann.

Das Robotersystem 100 verfügt über ein Verfahrsystem 110, umfassend eine horizontal ausgerichtete Tragschiene 10 und eine auf dieser Tragschiene 10 in Erstreckungsrichtung A der Tragschiene 10 verfahrbare Plattform 120. Die Tragschiene 10 weist an ihrer Unterseite Anschlussflansche 30 in Form von Bodenplatten 31 auf, die mit Bohrungen 32 versehen sind, um auf einem Untergrund, insbesondere einem Hallenboden oder einem hierfür vorgesehenen Podest, sicher befestigt zu werden. An der Oberseite der Tragschiene 10 sind zwei parallele, voneinander beabstandete Anschlussflansche 40 vorgesehen, an denen jeweils eine Führungsschiene 42 festgeschraubt ist. Auf diesen Führungsschienen kann die Plattform 120 verfahren werden, wobei sie hierfür über Rollen 122 verfügt. Der Antrieb erfolgt über einen Motor 126, der ein nicht dargestelltes Ritzel antreibt, welches mit einer Zahnstange 43 der Tragschiene 10 zusammenwirkt. Endseitig sind an der Tragschiene 10 jeweils Endanschläge 64 vorgesehen, um die Beweglichkeit der Plattform 120 zu limitieren. Auf der Oberseite 124 der Plattform 120 ist ein Industrieroboter 130 mit mehrachsig verschwenkbarem Roboterarm vorgesehen.

Durch die Anbringung des Industrieroboters 130 auf der Plattform 120 gewinnt der Roboter einen weiteren Freiheitsgrad, der beispielsweise genutzt werden kann, um weiter voneinander beabstandete Bearbeitungsorte zu erreichen oder ein Lager anzufahren, um von hier Bauteile zu holen.

Für die Versorgung der Plattform 120 und des Industrieroboters 130 ist ein gestrichelt dargestellter Leitungsstrang 128 vorgesehen, der in einer wannenartigen Mulde 22 zwischen den Führungsschienen 42 aufgenommen ist.

Die Tragschiene 10 ist primär aus metallischen Anschlussflanschen und Anbauteilen sowie aus einer die Grundstruktur der Tragschiene 10 bildenden Tragstruktur 20 aus Beton hergestellt. Insbesondere kann hier ultrahochfester Beton Verwendung finden.

Bezug nehmend auf Fig. 2 sind die überwiegenden Außenoberflächen der dort dargestellten Tragschiene 10 durch die aus Beton gegossene Tragstruktur 20 gebildet. Neben den bereits genannten Elementen der als Bodenplatte 31 ausgebildeten unteren Anschlussflansche 30 und der als Anbringungsleisten ausgebildeten oberen Anschlussflansche 40 sowie den daran angebrachten Führungsschienen 42 sind auch zwei endseitig angebrachte Anschlussflansche 60 sowie die beiden Endanschläge 64 zum überwiegenden Teil aus Metall gefertigt. Zum Zwecke des erleichterten Transportes sind quer zur Haupterstreckungsrichtung A Durchgangskanäle 70 vorgesehen, die durch rohrartige Hohlprofile 72 definiert sind.

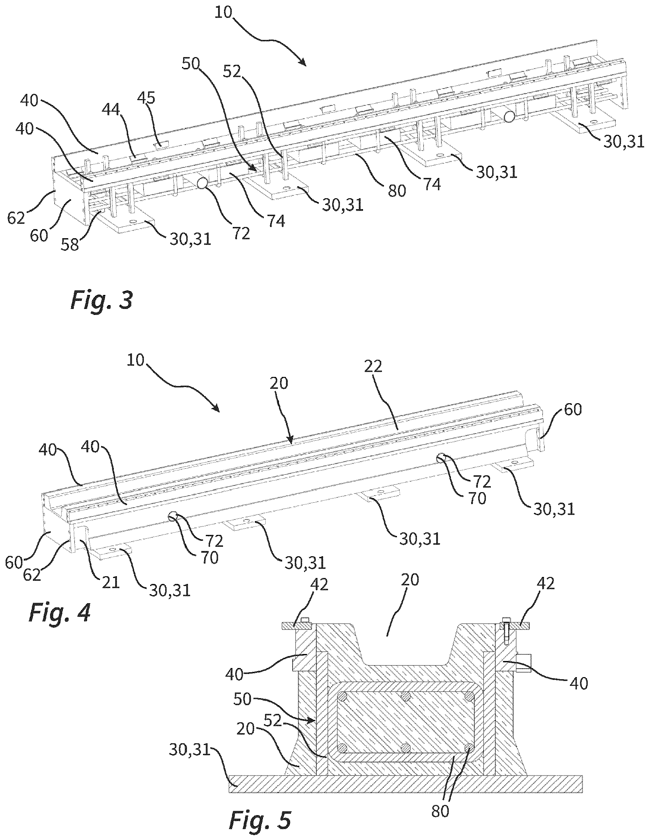

Anhand der Fig. 3 bis 5 einerseits und 6 bis 8 andererseits wird der Aufbau der Tragschienen 10 näher erläutert.

Das erste Ausführungsbeispiel der Fig. 3 bis 5 zeichnet sich dadurch aus, dass die oberen Anschlussflansche 40 zur Anbringung der Führungsschienen 42 und die unteren Anschlussflansche 30 in Form von Bodenplatten 31 miteinander über ein Innengerüst 50 verbunden sind. Vorliegend wird dieses Innengerüst 50 durch insgesamt 16 vertikal ausgerichtete Teilabschnitte 52 in Form von Metallstreben gebildet, die einerseits seitlich an den leistenartigen oberen Anschlussflanschen 40 angeschweißt sind und andererseits endseitig unten an den unteren Anschlussflanschen 30 angeschweißt sind. Dies lässt sich insbesondere anhand der Fig. 3 erkennen, in der die Tragstruktur 20 aus Beton ausgeblendet ist. Ebenfalls anhand der Fig. 3 ist ersichtlich, dass innerhalb der Tragstruktur 20 eine Bewehrung 80 zum Zwecke der Erhöhung der Festigkeit eingesetzt ist und dass zur Reduzierung der Masse der Tragschiene 10 weiterhin Styroporblöcke 74 hier eingesetzt sind. Weiter ist ersichtlich, dass die endseitigen Anschlussflansche 60 unmittelbar mit den Enden der oberen Anschlussflansche 40 verbunden sind, insbesondere mittels einer Schweißverbindung, und weiterhin durch Verbindungsabschnitte 58 an den Bodenplatten 31 angeschweißt sind. Des Weiteren sind an einigen der Anschlussflansche, vorliegend an den oberen leistenartigen Anschlussflanschen 40, Zuganker 44, 45 vorgesehen, die in den Bereichen zwischen den Bodenplatten 31 und den Teilabschnitte 52 den Zweck erfüllen, die Verbindung zur Tragstruktur 20 aus Beton zu verbessern. Grundsätzlich sind jedoch bei dem Ausführungsbeispiel der Fig. 3 bis 5 solche Zuganker nicht zwingend erforderlich, da bereits durch das Innengerüst 50 eine formschlüssige Anbindung der metallischen Komponenten an die Tragstruktur 20 geschaffen ist. Hierdurch können insbesondere durch den Roboter 130 auf die Tragschiene wirkende Momente und damit einhergehende Zugkräfte aufgenommen werden.

Fig. 4 zeigt die Tragschiene 10 einschließlich der Tragstruktur 20 aus Beton. Wie zu ersehen ist, bilden die endseitigen Flansche 60, die oberen Flansche 40 sowie die unteren Anschlussflansche 30 und die Hohlprofile 72 die einzigen Elemente, die nicht von dem Beton der Tragstruktur 20 umgeben sind. Im Bereich der stirnseitigen Anschlussflansche 60 sind Aussparungen 21 in der Tragstruktur 20 vorgesehen, um von hier Zugang zu den Schraublöchern 62 in den Anschlussflanschen 60 zu haben. Mittels dieser Anschlussflansche 60 können mehrere Tragschienen gleichen Typs miteinander verbunden werden.

Fig. 5 zeigt nochmals die Tragschiene 10 in einer Querschnittsdarstellung, aus der gut ersichtlich ist, wie die unteren Anschlussflansche 30 über die angeschweißten Teilabschnitte 52 des Innengerüsts 50 mit den als Leisten ausgebildeten oberen Anschlussflanschen 40 einstückig verbunden sind. Zu erkennen ist weiterhin, wie die Führungsschienen 42 durch Schraubverbindungen mit den Anschlussflanschen 40 verbunden sind.

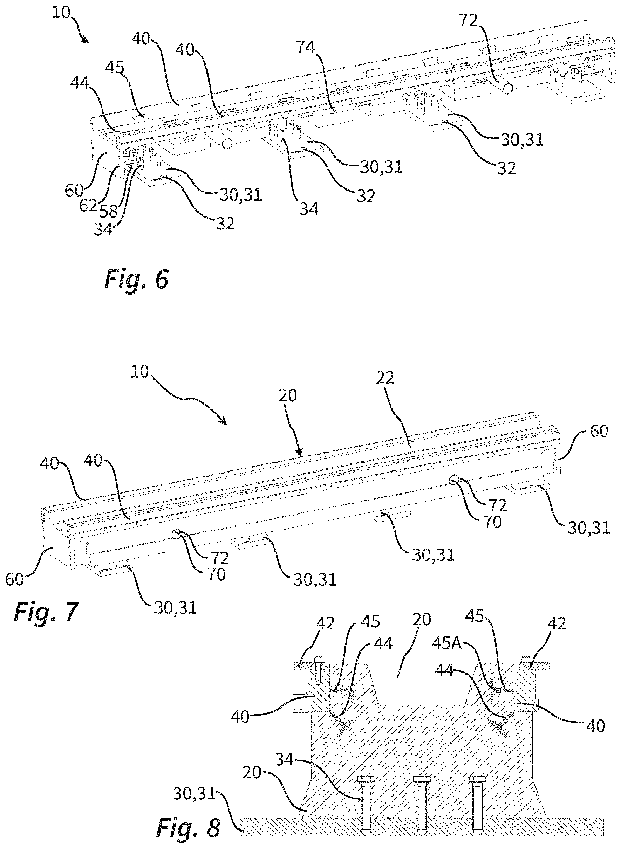

Das zweite Ausführungsbeispiel der Fig. 6 bis 8 entspricht bis auf die nachfolgend genannten Unterschiede dem Ausführungsbeispiel der Fig. 3 bis 5.

Der relevanteste Unterschied liegt darin, dass kein Innengerüst vorgesehen ist, welches die bodenseitigen unteren Anschlussflansche 30 mit den oberen Anschlussflanschen 40 metallisch verbindet. Stattdessen sind ähnlich dem vorangegangenen Ausführungsbeispiel durch Profilabschnitte gebildete Zuganker 44, 45 vorgesehen, die dabei auch zahlreicher und enger gesetzt an den oberen Anschlussflanschen 40 vorgesehen sind. Zusätzlich sind auch Zuganker 34 an den bodenseitigen Anschlussflanschen 30 vorgesehen, wobei vorliegend hierfür Schrauben verwendet werden, wie insbesondere anhand der Fig. 8 ersichtlich ist.

Der zweite relevante Unterschied zum Ausführungsbeispiel der Fig. 3 bis 5 liegt darin, dass vorliegend keine Bewehrung 80 in den Beton eingelegt ist. Dies hängt damit zusammen, dass die Gestaltung der Fig. 6 bis 8 mit Zugankern 34, 44, 45 statt einem Innengerüst 50 insbesondere dann bevorzugt wird, wenn ultrahochfester Beton, der sich auch auf Zug gut belasten lässt, Verwendung findet. Bei der Verwendung solchen Betons kannjedoch im Einzelfall auf die Bewehrung 80 verzichtet werden.

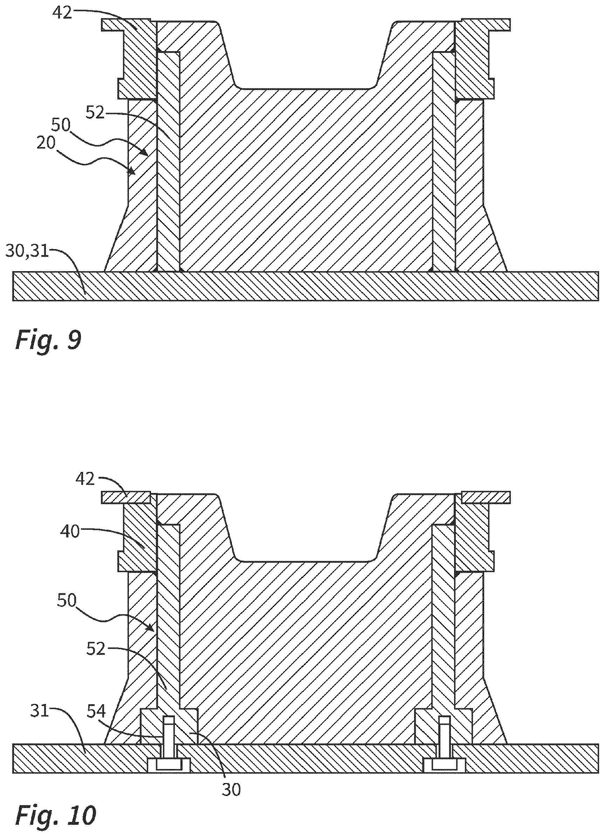

Die Fig. 9 bis 11 zeigen verschiedene Variationen zu den beiden vorangegangenen Ausführungsbeispielen der Fig. 3 bis 5 und 6 bis 8.

Beim Ausführungsbeispiel der Fig. 9 liegt die Besonderheit darin, dass hier keine separaten Führungsschienen 42 zur Anbringung an Anschlussflanschen 40 vorgesehen sind, sondern stattdessen einstückig unmittelbar die Führungsschienen 42 Teil des einstückigen Verbundes mit dem Innengerüst 50 und den bodenseitigen Anschlussflanschen 30 sind. Eine derartige Bauweise wird aufgrund der fehlenden Austauschbarkeit der Führungsschienen 42 jedoch nicht bevorzugt.

Die Besonderheit bei der Ausgestaltung der Fig. 10 liegt darin, dass abweichend von den vorangegangenen Ausgestaltungen der Fig. 3 bis 5 und 9 die Verbindung zwischen den oberen Anschlussflanschen 40 und den Bodenplatten 31 nicht alleine durch Schweißverbindungen geschaffen wird. Zwar ist das Innengerüst 50 an den oberen Anschlussflanschen 40 wiederum verschweißt. Die Verbindung zur Bodenplatte 31 erfolgt jedoch über eine Schraubverbindung 54, mittels derer die Bodenplatten 30 stirnseitig in die das Innengerüst 50 bildenden Stangen Teilabschnitte befestigt ist. Da die Teilabschnitte 52 bodenseitig aufgeweitet sind, stellen sie gewissermaßen bereits selbst die unteren Anschlussflansche 30 dar.

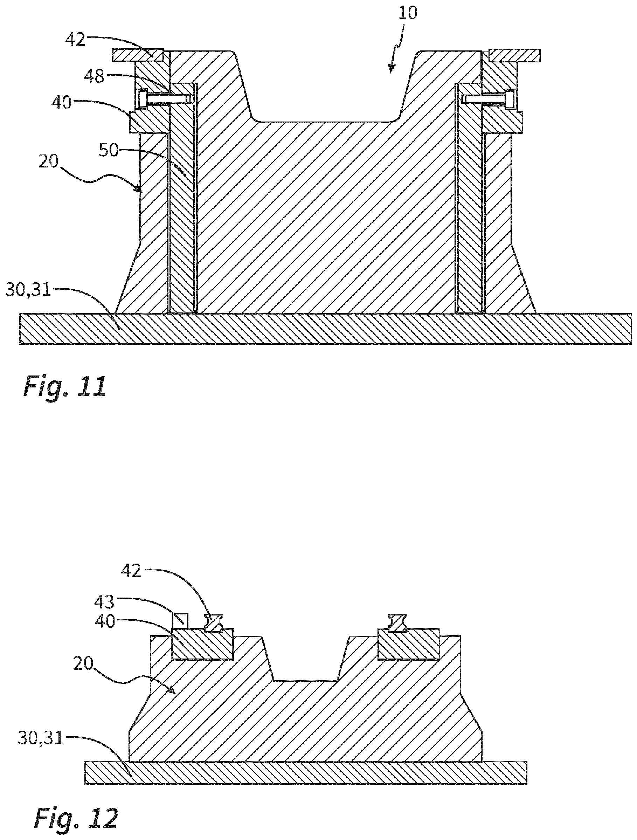

Die Ausgestaltung der Fig. 11 unterscheidet sich von allen vorangegangenen Ausführungsformen dadurch, dass die in Fig. 11 dargestellte Tragschiene 10 grundsätzlich abweichend von den vorherigen Gestaltungen hergestellt ist. Die Tragstruktur 20 aus Beton ist hier separat hergestellt worden. Erst anschließend ist der bodenseitige Anschlussflansch 30 mitsamt dem daran angeschweißten Innengerüst 50 von unten in die Tragstruktur 20 eingeschoben worden und die oberen Anschlussflansche 40 mittels einer Schraubverbindung 48 an das Innengerüst 50 angeschraubt worden. Eine solche Gestaltung bzw. ein solches Herstellungsverfahren werden nicht als vorteilhaft angesehen, können jedoch im Einzelfall zweckmäßig sein, insbesondere wenn es von logistischem Wert ist, die Tragstruktur 20 einerseits und die Anschlussflansche 30, 40 und das Innengerüst 50 andererseits an getrennten Orten herstellen zu können.

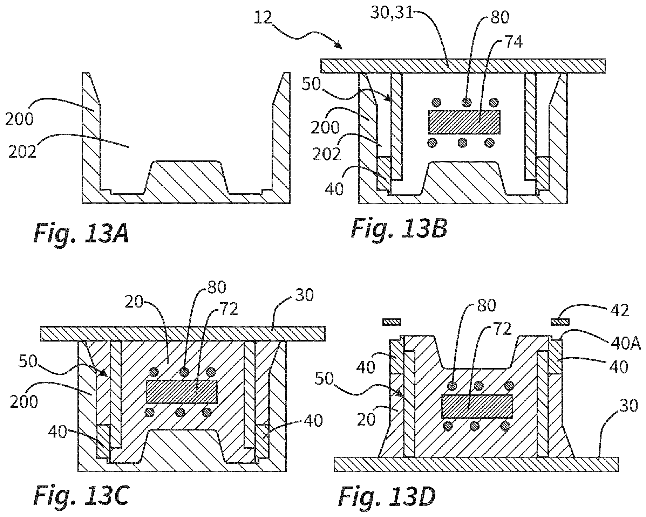

Bei der Ausgestaltung gemäß Fig. 12 ist die Anordnung der Führungsschienen 42 und der hierzu gehörigen Anschlussflansche 40 etwas anders als bei vorangegangenen Beispielen geartet, da die Anschlussflansche unmittelbar auf der nach oben weisenden Seite der Tragstruktur 20 vorgesehen sind. Die bevorzugte Art der Herstellung einer erfindungsgemäßen Tragschiene 10 ist in den Fig. 13A bis 13D dargestellt. Ausgehend von einer aus Holz oder Metall hergestellten Schalung 200, die einen nach oben offenen Aufnahmeraum 202 definiert, wird zunächst eine Metallstruktur 12 eingelegt, die den bodenseitigen Anschlussflansch 30, die oberen Anschlussflansche 40 sowie das Innengerüst 50 umfasst. Wie anhand der Fig. 12B ersichtlich ist, wird diese Metallstruktur 12 gegenüber der späteren Ausrichtung bei der Verwendung in einer Überkopflage in die Schalung 200 eingebracht. Zusätzlich können weitere Elemente, wie Styroporblöcke 74, Bewehrungen 80 oder die nicht dargestellten Hohlprofile 72, in dieser Phase in die Schalung 200 eingelegt werden. Wie anhand der Fig. 12C ersichtlich ist, wird anschließend der Beton in die Schalung 200 eingegossen. Er umgibt dann überwiegend die Flächen der Metallstruktur 12. Nur im Bereich der zu diesem Zeitpunkt oben befindlichen unteren Anschlussflansche 30 und der zu diesem Zeitpunkt unten befindlichen oberen Anschlussflansche 40 bleiben die Außenflächen frei von Beton. Das Innengerüst 50 hingegen wird vom Beton umschlossen, ebenso wie die Bewehrung und die Styroporblöcke 74. Nach dem Aushärten des Betons wird die noch unfertige Tragschiene aus der Schalung 200 entfernt. Anschließend werden in einem Bearbeitungszentrum Außenflächen, insbesondere metallische Außenflächen, der Metallstruktur 12 spanend bearbeitet und gegebenenfalls Bohrungen zur Anbringung weiterer Anbauteile angebracht. Das Schleifen der Außenflächen, beispielsweise der Fläche 40A, an der die Führungsschiene 42 angebracht wird, dient auch dem Zweck, hierbei Betonreste hiervon entfernen zu können.

Die spanende Bearbeitung erst nach dem Gießvorgang des Betons ist in Hinblick auf die Fertigungspräzision sehr von Vorteil. Eine ungenaue Positionierung der Metallstruktur 12 innerhalb der Schalung 200 oder eine ungenaue Zusammenfügung der verschiedenen Elemente der Metallstruktur 12 kann in dieser Phase nach Gießen der Tragstruktur 20 durch die dann folgende spanende Bearbeitung meist korrigiert werden.

## Patentansprüche

1. Robotersystem (100) mit den folgenden Merkmalen:
a. das Robotersystem (100) umfasst ein Verfahrsystem (110) mit einer Tragschiene (10) in Art eines in einer Haupterstreckungsrichtung ausgerichteten länglichen Bauelements und eine entlang der Haupterstreckungsrichtung der Tragschiene (10) verfahrbare Roboterplattform (120) zur Anbringung eines Roboters (130),
b. das Robotersystem (100) umfasst einen auf der Roboterplattform (120) angebrachten Roboter (130),
**gekennzeichnet durch** die Merkmale:
c. die Tragschiene (10) ist mit mindestens einer an der Außenseite vorgesehenen und in Haupterstreckungsrichtung erstreckten metallischen Führungsschiene (42) zur Führung der Roboterplattform (120) ausgebildet,
d. die Tragschiene (10) weist in einem nach unten weisenden Teilabschnitt mindestens einen unteren metallischen Anschlussflansch (30) zur Befestigung der Tragschiene (10) auf einem Untergrund wie einem Hallenboden auf,
e. die Tragschiene (10) weist in einem nach oben weisenden Teilabschnitt an einer Außenseite mindestens einen oberen metallischen Anschlussflansch (40) zur Anbringung der metallischen Führungsschiene und/oder unmittelbar die mindestens eine metallische Führungsschiene (42) auf,
f. die Tragschiene (10) verfügt über eine Tragstruktur (20) aus Beton, an deren Außenseite der untere metallische Anschlussflansch (30) sowie der obere Anschlussflansch (40) bzw. die Führungsschiene (42) angebracht sind, und
g. der obere metallische Anschlussflansch (40), der untere metallische Anschlussflansch (30) und/oder die Führungsschiene (42) sind
- mittels formschlüssig in die Tragstruktur aus Beton eingreifender Zuganker (34, 44, 45) und/oder
- über ein von der der Tragstruktur umgebenes verbindendes Innengerüst (50) an der Tragstruktur (20) gesichert.

2. Robotersystem (100) nach Anspruch 1 mit dem folgenden zusätzlichen Merkmale:
a. mindestens einer der Anschlussflansche (30, 40) oder die Führungsschiene (42) liegt durch Angießen des Betons an die betreffende Komponente oder partiellem Umgießen der betreffende Komponente unmittelbar bündig an der Tragstruktur aus Beton an.

3. Robotersystem (100) nach Anspruch 1 oder 2 mit den folgenden zusätzlichen Merkmalen:
a. der mindestens eine untere metallische Anschlussflansch (30) wird durch mindestens eine Bodenplatte (31) gebildet, die Bohrungen (32) zur Anbringung am Untergrund aufweist, wobei vorzugsweise eine Mehrzahl von zueinander beanstandeten Bodenplatten (31) vorgesehen ist, oder
b. der mindestens eine untere metallische Anschlussflansch (30) weist mindestens eine Gewindebohrung (36) zur Anbringung einer Bodenplatte (38) auf, wobei vorzugsweise eine Mehrzahl von Gewindebohrungen (36) zur Anbringung einer Mehrzahl von Bodenplatten (38) vorgesehen ist.

4. Robotersystem (100) nach einem der vorstehenden Ansprüche mit einem der folgenden zusätzlichen Merkmale:
a. es sind mindestens zwei obere metallische Anschlussflansche (40) an der Außenseite der Tragstruktur (20) vorgesehen, die jeweils zur Anbringung einer der Führungsschienen (42) vorgesehen sind und die jeweils eigene Zuganker (44, 45) aufweisen oder jeweils separat mit dem von der Tragstruktur umgebenen Innengerüst (50) verbunden sind, oder
b. es sind mindestens zwei Führungsschienen (42) unmittelbar an der Außenseite der Tragstruktur (20) vorgesehen, die jeweils eigene Zuganker aufweisen oder jeweils separat mit dem von der Tragstruktur (20) umgebenen Innengerüst (50) verbunden sind,
vorzugsweise mit dem folgenden zusätzlichen Merkmal:
c. zwischen den beiden Führungsschienen (42) ist eine in Haupterstreckungsrichtung ausgerichtete Wanne (22) zur Aufnahme eines Kabelstrangs (102) der Roboterplattform (120) in der Tragstruktur (20) aus Beton vorgesehen.

5. Robotersystem (100) nach einem der vorstehenden Ansprüche mit einem der folgenden zusätzlichen Merkmale:
a. an mindestens einem Stirnende der Tragschiene (10) ist ein weiterer metallischer Anschlussflansch (60) zum Zwecke der Ankopplung einer weiteren Tragschiene und/oder zur Anbringung eines Endanschlags (64) für die Roboterplattform (120) vorgesehen, oder
b. an mindestens einem Ende der Tragschiene (10) ist unmittelbar an der Außenseite der Tragstruktur mindestens ein Endanschlag (64) für die Roboterplattform (120) vorgesehen,
vorzugsweise mit dem folgenden zusätzlichen Merkmal:
c. der weitere metallische Anschlussflansch (60) und/oder der Endanschlag (64) für die Roboterplattform (120) ist über das Innengerüst (50) mit dem unteren metallischen Anschlussflansch (30) und/oder dem oberen metallischen Anschlussflansch (40) bzw. der Führungsschiene (42) verbunden oder
d. der weitere metallische Anschlussflansch (60) und/oder der Endanschlag (64) verfügen über mindestens einen formschlüssig in die Tragstruktur (20) aus Beton eingreifender Zuganker.

6. Robotersystem (100) nach einem der vorstehenden Ansprüche mit dem folgenden zusätzlichen Merkmal:
a. es sind mehrere untere metallische Anschlussflansche (30) an der Unterseite der Tragschiene vorgesehen,
- die an einem gemeinsamen Innengerüst angebracht sind oder
- die mittels voneinander getrennter Teilabschnitte (52) des Innengerüsts (50) an der gemeinsamen Führungsschiene (42) oder einem gemeinsamen oberen metallischen Anschlussflansch (40) angebracht sind.

7. Robotersystem (100) nach einem der vorstehenden Ansprüche mit mindestens einem der folgenden zusätzlichen Merkmalen
a. das metallische Innengerüst (50) ist mit mindestens einem der Anschlussflansch (30, 40) oder der Führungsschiene (42) durch eine Schweißverbindung verbunden, und/oder
b. das metallische Innengerüst (50) ist mit mindestens einem der Anschlussflansche (30, 40) oder der Führungsschiene (42) durch eine Schraubverbindung (54) verbunden.

8. Robotersystem (100) nach einem der vorstehenden Ansprüche mit mindestens einem der folgenden zusätzlichen Merkmalen:
a. mindestens ein Anschlussflansch (30, 60) ist mit einer planen Anlagefläche oder Auflagefläche zur flächigen Anlage an einer externen Kontaktfläche ausgebildet, und/oder
b. mindestens ein Anschlussflansch (30, 60, 40) ist mit einer Befestigungsbohrung oder Befestigungsausnehmung zurAufnahme einer Befestigungsschaube versehen, und/oder
c. die Zuganker (44, 45) werden zumindest teilweise durch in Haupterstreckungsrichtung gebildete Strangprofile gebildet, insbesondere durch I-Profile oder T-Profile, wobei vorzugsweise an einem Anschlussflansch (40) oder einer Führungsschiene mehrere solche durch Strangprofile gebildete Zuganker (44, 45) in Haupterstreckungsrichtung (A) beabstandet zueinander angebracht sind und/oder Entlüftungsbohrungen (45A) im Strangprofil vorgesehen sind.

9. Robotersystem (100) nach einem der vorstehenden Ansprüche mit mindestens einem der folgenden zusätzlichen Merkmalen:
a. die Tragstruktur (20) ist aus Zementbeton oder aus Polymerbeton hergestellt, und/oder
b. die Tragstruktur (20) weist mindestens einen Durchgangskanal (70) als Transporthilfe auf, wobei vorzugsweise ein Hohlprofil (72) aus Kunststoff und/oder Metall zur Bildung des Durchgangskanals vorgesehen ist, und/oder
c. in den Beton der Tragstruktur (20) sind unabhängig von der Anschlussflanschen (30, 40) bzw. der Führungsschiene (42) Bewehrungsstangen (80) eingebracht, die vorzugsweise in Haupterstreckungsrichtung (A) der Tragschiene (10) ausgerichtet sind und/oder
d. in den Beton der Tragstruktur (20) ist zur Verminderung der Masse mindestens ein Freibereich vorgesehen oder mindestens ein Block (74) aus Kunststoff, insbesondere aus Polystyrol, eingebracht, und/oder
e. die Oberfläche der Tragstruktur (20) aus Beton ist zumindest abschnittsweise geschliffen und/oder
f. die Oberfläche der Tragstruktur (20) aus Beton ist zumindest abschnittsweise mit einer Beschichtung versehen, insbesondere in Bereichen, die durch Zuführleitungen des Roboters im Betrieb einer mechanischen Belastung ausgesetzt sind und/oder
g. die Oberfläche Tragschiene hat in Haupterstreckungsrichtung eine Länge von mindestens 3m, vorzugsweise zwischen 4m und 8m.

10. Verfahren zur Herstellung eines Robotersystems (100) mit Tragschiene (10) nach einem der Ansprüche 1 bis 9 mit den folgenden Merkmalen:
a. es wird eine Metallstruktur (12) erstellt, die ein Innengerüst (50) und mindestens einen unteren metallischen Anschlussflansch (30) und mindestens einen oberen metallischen Anschlussflansch (40) bzw. eine Führungsschiene (42) umfasst, wobei diese mindestens zwei Teile vorzugsweise mit dem Innengerüst (50) verschweißt sind, und
b. die Metallstruktur (12) wird in eine Schalung (200) eingelegt, und
c. die Schalung (200) wird anschließend mit Beton ausgegossen, so dass hierdurch die Tragstruktur (20) gebildet wird, wobei das Innengerüst (50) zumindest abschnittsweise vom Beton umgeben ist und der mindestens eine Anschlussflansch (30) bzw. die Führungsschiene (42) zumindest abschnittsweise außerhalb einer Oberfläche der Tragstruktur angeordnet ist.

11. Verfahren zur Herstellung eines Robotersystems mit Tragschiene (10) nach einem der Ansprüche 1 bis 9 mit den folgenden Merkmalen:
a. mindestens ein unterer metallischen Anschlussflansch (30), mindestens ein oberer metallischer Anschlussflansch (40) und/oder mindestens eine Führungsschiene (42) werden in einem Außenbereich in eine Schalung (200) eingelegt, wobei mindestens ein Zuganker (44, 45) je Anschlussflansch (30, 40) oder Führungsschiene (42) in einen Innenraum der Schalung (200) hineinragt, und
b. die Schalung (200) wird anschließend mit Beton ausgegossen, so dass hierdurch die Tragstruktur (20) gebildet wird, wobei die Zuganker (44, 45) derart mit Beton umgeben werden, dass sie formschlüssig einer Trennung von der Tragstruktur (20) entgegenwirken, und wobei mindestens eine Anschlussflansch (30, 40) bzw. die Führungsschiene (42) zumindest abschnittsweise außerhalb einer Oberfläche der Tragstruktur (20) angeordnet ist.

12. Verfahren zur Herstellung eines Robotersystems (100) mit Tragschiene (10) nach einem der Ansprüche 1 bis 9 mit den folgenden Merkmalen:
a. es wird ein die Tragstruktur (20) bildender Betonkörper in einer Schaltung (200) gegossen, in dem bereits beim Gießen Durchgangslöcher für das Innengerüst freigehalten werden oder nach dem Gießen Durchgangslöcher eingebracht werden, und
b. das Innengerüst (50) wird anschießend in die Durchgangslöcher eingeschoben und verbindet an gegenüberliegenden Enden angebrachte Anschlussflansche (30, 40) bzw. mindestens einen Anschlussflansch (30, 40) und eine Führungsschiene (42).

13. Verfahren nach einem der Ansprüche 10 bis 12 mit mindestens einem der folgenden Merkmale:
a. die Außenflächen der Tragstruktur (20) werden zumindest teilweise geschliffen und/oder mit einer Beschichtung versehen und/oder
b. die noch unfertige Tragschiene, umfassend die Tragstruktur (20) und
- das Innengerüst (50) und mindestens zwei Anschlussflansche (30, 40) oder mindestens einen Anschlussflansch (30) und mindestens eine Führungsschiene (42) oder
- mindestens zwei Anschlussflansche (30, 40) oder mindestens einen Anschlussflansch (30) und mindestens eine Führungsschiene (42), die jeweils mit Zugankern versehen sind,
wird im Bereich mindestens eines Anschlussflansches (30, 40) bzw. der Führungsschiene (42) spanend nachbearbeitet, insbesondere mittels einer Schleifbearbeitung und/oder eine Bohrbearbeitung

14. Verfahren nach einem der Ansprüche 10 bis 13 mit mindestens einem der folgenden Merkmale:
a. während des Gießens der Tragstruktur (20) weisen die oberen Anschlussflansche (40) bzw. die Führungsschienen (42) nach unten und die unteren Anschlussflansche (30) nach oben.

## Claims

1. Robot system (100) having the following features:
a. the robot system (100) comprises a displacement system (110), having a support rail (10) in the manner of an elongate component oriented in a main-extent direction, and also comprises a robot platform (120), which can be displaced along the main-extent direction of the support rail (10) and on which a robot (130) can be fitted,
b. the robot system (100) comprises a robot (130), which is fitted on the robot platform (120), **characterized by** the following features:
c. the support rail (10) is designed with at least one metallic guide rail (42) for guiding the robot platform (120), said guide rail being provided on the outer side of the support rail and extending in the main-extent direction,
d. in a downwardly oriented portion, the support rail (10) has at least one lower metallic connection flange (30) for fastening the support rail (10) on an underlying surface such as a hall floor,
e. in an upwardly oriented portion, on an outer side, the support rail (10) has at least one upper metallic connection flange (40), on which the metallic guide rail can be fitted, and/or has the at least one metallic guide rail (42) directly,
f. the support rail (10) has a support structure (20), which is made of concrete and on the outer side of which are fitted the lower metallic connection flange (30) and the upper connection flange (40) and/or the guide rail (42), and
g. the upper metallic connection flange (40), the lower metallic connection flange (30) and/or the guide rail (42) are secured on the support structure (20)
- by means of tie rods (34, 44, 45), which engage in a form-fitting manner in the concrete support structure, and/or
- via a connecting inner framework (50), which is enclosed by the support structure.

2. Robot system (100) according to Claim 1, having the following additional features:
a. at least one of the connection flanges (30, 40) or the guide rail (42) butts directly in a flush manner against the concrete support structure as a result of the concrete being cast onto the relevant component or partially encasing the relevant component.

3. Robot system (100) according to Claim 1 or 2, having the following additional features:
a. the at least one lower metallic connection flange (30) is formed by at least one baseplate (31), which has bores (32) for fitting purposes on the underlying surface, wherein preferably a plurality of spaced-apart baseplates (31) are provided, or
b. the at least one lower metallic connection flange (30) has at least one threaded bore (36) for the purpose of fitting a baseplate (38), wherein preferably a plurality of threaded bores (36) are provided for the purpose of fitting a plurality of baseplates (38).

4. Robot system (100) according to one of the preceding claims, having one of the following additional features:
a. there are at least two upper metallic connection flanges (40) provided on the outer side of the support structure (20), each of these connection flanges being provided for the fitting of one of the guide rails (42) and having respectively dedicated tie rods (44, 45) or each being connected separately to the inner framework (50), which is enclosed by the carrying structure, or
b. there are at least two guide rails (42) provided directly on the outer side of the support structure (20), each of these guide rails having respectively dedicated tie rods or each being connected separately to the inner framework (50), which is enclosed by the support structure (20), preferably having the following additional feature:
c. a trough (22), which is oriented in the main-extent direction and is intended for accommodating a cable harness (102) of the robot platform (120), is provided in the concrete support structure (20), between the two guide rails (42).

5. Robot system (100) according to one of the preceding claims, having one of the following additional features:
a. a further metallic connection flange (60) is provided at at least one end of the support rail (10), it being possible for a further support rail to be coupled thereto and/or for an end stop (64) for the robot platform (120) to be fitted thereon, or
b. at least one end stop (64) for the robot platform (120) is provided, directly on the outer side of the support structure, at at least one end of the support rail (10),
preferably having the following additional feature:
c. the further metallic connection flange (60) and/or the end stop (64) for the robot platform (120) are/is connected to the lower metallic connection flange (30) and/or the upper metallic connection flange (40) and/or the guide rail (42) via the inner framework (50), or
d. the further metallic connection flange (60) and/or the end stop (64) have/has at least one tie rod, which engages in a form-fitting manner in the concrete support structure (20).

6. Robot system (100) according to one of the preceding claims, having the following additional feature:
a. there are a plurality of lower metallic connection flanges (30) provided on the underside of the support rail, said connection flanges
- being fitted on a common inner framework or
- being fitted, by means of separate portions (52) of the inner framework (50), on the common guide rail (42) or a common upper metallic connection flange (40).

7. Robot system (100) according to one of the preceding claims, having at least one of the following additional features:
a. the metallic inner framework (50) is connected to at least one of the connection flanges (30, 40) or to the guide rail (42) by a welding connection, and/or
b. the metallic inner framework (50) is connected to at least one of the connection flanges (30, 40) or to the guide rail (42) by a screw connection (54).

8. Robot system (100) according to one of the preceding claims, having at least one of the following additional features:
a. at least one connection flange (30, 60) is designed with a planar abutment surface or bearing surface for surface-area abutment against an external contact surface, and/or
b. at least one connection flange (30, 60, 40) is provided with a fastening bore or a fastening recess for accommodating a fastening screw, and/or
c. the tie rods (44, 45) are formed, at least in part, by extruded profiles, in particular by I-section profiles or T-section profiles, which are formed in the main-extent direction, wherein a plurality of such tie rods (44, 45) formed by extruded profiles are fitted at a distance apart from one another in the main-extent direction (A) preferably on a connection flange (40) or a guide rail, and/or ventilation bores (45A) are provided in the extruded profile.

9. Robot system (100) according to one of the preceding claims, having at least one of the following additional features:
a. the support structure (20) is produced from cement concrete or from polymer concrete, and/or
b. the support structure (20) has at least one through-passage channel (70) in the form of a transporting aid, wherein preferably a hollow profile (72) made of plastic and/or metal is provided in order to form the through-passage channel, and/or
c. reinforcement rods (80) are introduced into the concrete of the support structure (20), independently of the connection flanges (30, 40) and/or of the guide rail (42), said reinforcement rods being oriented preferably in the main-extent direction (A) of the support rail (10), and/or
d. at least one free region is provided in the concrete of the support structure (20), or at least one block (74) made of plastic, in particular of polystyrene, is introduced into the same, in order to reduce the mass, and/or
e. the surface of the concrete support structure (20) is ground at least in part, and/or
f. the surface of the concrete support structure (20) is provided with a coating at least in part, in particular in regions which are subjected to mechanical loading during operation as a result of feedlines of the robot, and/or
g. the surface of the support rail has a length of at least 3 m, preferably between 4 m and 8 m, in the main-extent direction.

10. Method for producing a robot system (100) with support rail (10) according to one of Claims 1 to 9, having the following features:
a. a metal structure (12) which comprises an inner framework (50) and at least one lower metallic connection flange (30) and at least one upper metallic connection flange (40) and/or a guide rail (42) is created, these at least two parts being welded preferably to the inner framework (50), and
b. the metal structure (12) is positioned in a formwork (200), and
c. the formwork (200) is then filled with concrete, the support structure (20) being formed as a result, wherein the inner framework (50) is enclosed at least in part by the concrete, and the at least one connection flange (30) and/or the guide rail (42) are/is arranged at least in part outside a surface of the support structure.

11. Method for producing a robot system with support rail (10) according to one of Claims 1 to 9, having the following features:
a. at least one lower metallic connection flange (30), at least one upper metallic connection flange (40) and/or at least one guide rail (42) are positioned in an outer region of a formwork (200), wherein at least one tie rod (44, 45) for each connection flange (30, 40) or guide rail (42) projects into an interior of the formwork (200), and
b. the formwork (200) is then filled with concrete, the support structure (20) being formed as a result, wherein the tie rods (44, 45) are enclosed by concrete such that they withstand separation from the support structure (20) in a form-fitting manner, and wherein at least one connection flange (30, 40) and/or the guide rail (42) are/is arranged at least in part outside a surface of the support structure (20).

12. Method for producing a robot system (100) with support rail (10) according to one of Claims 1 to 9, having the following features:
a. a concrete body forming the support structure (20) is cast in a formwork (200), through-passage holes for the inner framework being kept free in said concrete body during the casting process, or through-passage holes being introduced into the same following the casting process, and
b. the inner framework (50) is then pushed into the through-passage holes and connects connection flanges (30, 40), which are fitted at opposite ends, and/or at least one connection flange (30, 40) and a guide rail (42).

13. Method according to one of Claims 10 to 12, having at least one of the following features:
a. the outer surfaces of the support structure (20) are provided with a coating and/or ground at least to some extent, and/or
b. the as yet unfinished support rail, comprising the support structure (20) and
- the inner framework (50) and at least two connection flanges (30, 40) or at least one connection flange (30) and at least one guide rail (42) or
- at least two connection flanges (30, 40) or at least one connection flange (30) and at least one guide rail (42), each provided with tie rods,
is subjected to follow-up machining, in particular by means of grinding and/or drilling, in the region of at least one connection flange (30, 40) and/or of the guide rail (42).

14. Method according to one of Claims 10 to 13, having at least one of the following features:
a. the upper connection flanges (40) and/or the guide rails (42) are oriented downwards, and the lower connection flanges (30) are oriented upwards, during the process of the support structure (20) being cast.

## Revendications

1. Système de robot (100) comprenant les caractéristiques suivantes :
a. le système de robot (100) comprend un système de déplacement (110) avec un rail porteur (10) à la manière d'un élément structurel allongé orienté dans une direction d'étendue principale et une plate-forme robotique (120) déplaçable le long de la direction d'étendue principale du rail porteur (10) pour monter un robot (130),
b. le système de robot (100) comprend un robot (130) monté sur la plate-forme robotique (120),
**caractérisé par** les caractéristiques suivantes :
c. le rail porteur (10) est réalisé avec au moins un rail de guidage métallique (42) prévu au niveau du côté extérieur et s'étendant dans la direction d'étendue principale pour le guidage de la plate-forme robotique (120),
d. le rail porteur (10) présente, dans une portion partielle orientée vers le bas, au moins une bride de raccordement métallique inférieure (30) pour la fixation du rail porteur (10) sur un subjectile tel qu'un sol d'entrepôt,
e. le rail porteur (10) présente, dans une portion partielle orientée vers le haut, au niveau d'un côté extérieur, au moins une bride de raccordement métallique supérieure (40) pour le montage du rail de guidage métallique, et/ou présente directement l'au moins un rail de guidage métallique (42),
f. le rail porteur (10) dispose d'une structure porteuse (20) en béton, au niveau du côté extérieur de laquelle sont montés la bride de raccordement métallique inférieure (30) ainsi que la bride de raccordement supérieure (40), ou le rail de guidage (42), et
g. la bride de raccordement métallique supérieure (40), la bride de raccordement métallique inférieur (30) et/ou le rail de guidage (42) sont fixés à la structure porteuse (20)
- au moyen de tirants d'ancrage (34, 44, 45) s'engageant par correspondance de formes dans la structure porteuse en béton et/ou
- par le biais d'une armature intérieure (50) de connexion entourée par la structure porteuse.

2. Système de robot (100) selon la revendication 1, comprenant la caractéristique supplémentaire suivante :
a. au moins l'une des brides de raccordement (30, 40) ou le rail de guidage (42) s'applique par coulée du béton contre le composant concerné ou par coulée partielle sur le pourtour du composant concerné directement en affleurement contre la structure porteuse en béton.

3. Système de robot (100) selon la revendication 1 ou 2, comprenant les caractéristiques supplémentaires suivantes :
a. l'au moins une bride de raccordement métallique inférieure (30) est formée par au moins une plaque de fond (31) qui présente des alésages (32) pour le montage sur le subjectile, de préférence une pluralité de plaques de fond espacées les unes des autres (31) étant prévues, ou
b. l'au moins une bride de raccordement métallique inférieure (30) présente au moins un alésage fileté (36) pour le montage d'une plaque de fond (38), une pluralité d'alésages filetés (36) étant de préférence prévus pour le montage d'une pluralité de plaques de fond (38).

4. Système de robot (100) selon l'une quelconque des revendications précédentes, comprenant l'une des caractéristiques supplémentaires suivantes :
a. au moins deux brides de raccordement métalliques supérieures (40) sont prévues au niveau du côté extérieur de la structure porteuse (20), lesquelles sont à chaque fois prévues pour le montage de l'un des rails de guidage (42) et lesquelles présentent chacune un tirant d'ancrage propre (44, 45) ou lesquelles sont à chaque fois connectées séparément à l'armature intérieure (50) entourée par la structure porteuse, ou
b. au moins deux rails de guidage (42) sont prévus directement sur le côté extérieur de la structure porteuse (20), lesquels présentent chacun un tirant d'ancrage propre ou lesquels sont à chaque fois connectés séparément à l'armature intérieure (50) entourée par la structure porteuse (20),
comprenant de préférence la caractéristique supplémentaire suivante :
c. un bac (22) orienté dans la direction d'étendue principale est prévu entre les deux rails de guidage (42) pour recevoir un tronçon de câble (102) de la plate-forme robotique (120) dans la structure porteuse (20) en béton.

5. Système de robot (100) selon l'une quelconque des revendications précédentes, comprenant l'une des caractéristiques supplémentaires suivantes :
a. une bride de raccordement métallique supplémentaire (60) est prévue au niveau d'au moins une extrémité frontale du rail porteur (10) afin de raccorder un rail porteur supplémentaire et/ou afin de monter une butée d'extrémité (64) pour la plate-forme robotique (120), ou
b. au moins une butée d'extrémité (64) pour la plate-forme robotique (120) est prévue au niveau d'au moins une extrémité du rail porteur (10), directement au niveau du côté extérieur de la structure porteuse,
de préférence comprenant la caractéristique supplémentaire suivante :
c. la bride de raccordement métallique supplémentaire (60) et/ou la butée d'extrémité (64) pour la plate-forme robotique (120) est/sont connectées par le biais de l'armature intérieure (50) à la bride de raccordement métallique inférieure (30) et/ou à la bride de raccordement métallique supérieure (40) ou au rail de guidage (42) ou
d. la bride de raccordement métallique supplémentaire (60) et/ou la butée d'extrémité (64) disposent d'au moins un tirant d'ancrage s'engageant par correspondance de formes dans la structure porteuse (20) en béton.

6. Système de robot (100) selon l'une quelconque des revendications précédentes, comprenant la caractéristique supplémentaire suivante :
a. il est prévu plusieurs brides de raccordement métalliques inférieures (30) au niveau du côté inférieur du rail porteur,
- lesquelles sont montées sur une armature intérieure commune ou
- lesquelles sont montées au moyen de portions partielles séparées les unes des autres (52) de l'armature intérieure (50) au niveau du rail de guidage commun (42) ou au niveau d'une bride de raccordement métallique supérieure commune (40) .

7. Système de robot (100) selon l'une quelconque des revendications précédentes, comprenant au moins l'une des caractéristiques supplémentaires suivantes :
a. l'armature intérieure métallique (50) est connectée à au moins l'une des brides de raccordement (30, 40) ou au rail de guidage (42) par une connexion soudée, et/ou
b. l'armature intérieure métallique (50) est connectée à au moins l'une des brides de raccordement (30, 40) ou au rail de guidage (42) par une connexion vissée (54).

8. Système de robot (100) selon l'une quelconque des revendications précédentes, comprenant au moins l'une des caractéristiques supplémentaires suivantes :
a. au moins une bride de raccordement (30, 60) est réalisée avec une surface d'appui plane ou avec une surface de support pour l'appui plan contre une surface de contact externe, et/ou
b. au moins une bride de raccordement (30, 60, 40) est pourvue d'un alésage de fixation ou d'un évidement de fixation pour recevoir une vis de fixation, et/ou
c. les tirants d'ancrage (44, 45) sont formés au moins en partie par des profilés filés formés dans la direction d'étendue principale, en particulier par des profilés en I ou des profilés en T, de préférence plusieurs tels tirants d'ancrage (44, 45) formés par des profilés filés étant montés de manière espacée les uns des autres dans la direction d'étendue principale (A) au niveau d'une bride de raccordement (40) ou d'un rail de guidage et/ou des alésages de ventilation (45A) étant prévus dans le profilé filé.

9. Système de robot (100) selon l'une quelconque des revendications précédentes, comprenant au moins l'une des caractéristiques supplémentaires suivantes :
a. la structure porteuse (20) est fabriquée en béton de ciment ou en béton de polymère, et/ou
b. la structure porteuse (20) présente au moins un canal traversant (70) en tant qu'auxiliaire de transport, de préférence un profilé creux (72) en plastique et/ou en métal étant prévu pour former le canal traversant, et/ou
c. dans le béton de la structure porteuse (20) sont introduites des barres d'armature (80) indépendamment des brides de raccordement (30, 40) ou du rail de guidage (42), lesquelles sont orientées de préférence dans la direction d'étendue principale (A) du rail porteur (10) et/ou
d. dans le béton de la structure porteuse (20) est prévue au moins une région libre pour réduire la masse ou est introduit au moins un bloc (74) de plastique, en particulier de polystyrène, et/ou
e. la surface de la structure porteuse (20) en béton est au moins en partie meulée et/ou
f. la surface de la structure porteuse (20) en béton est au moins en partie pourvue d'un revêtement, en particulier dans des régions qui sont exposées pendant le fonctionnement à une sollicitation mécanique par des conduites d'alimentation du robot et/ou
g. la surface du rail porteur présente, dans la direction d'étendue principale, une longueur d'au moins 3 m, de préférence comprise entre 4 m et 8 m.

10. Procédé de fabrication d'un système de robot (100) comprenant un rail porteur (10) selon l'une quelconque des revendications 1 à 9, comprenant les caractéristiques suivantes :
a. une structure métallique (12) est érigée, laquelle comprend une armature intérieure (50) et au moins une bride de raccordement métallique inférieure (30) et au moins une bride de raccordement métallique supérieure (40) ou un rail de guidage (42), ces au moins deux parties étant de préférence soudées à l'armature intérieure (50), et
b. la structure métallique (12) est insérée dans un coffrage (200), et
c. le coffrage (200) est ensuite coulé avec du béton de telle sorte que la structure porteuse (20) soit ainsi formée, l'armature intérieure (50) étant au moins en partie entourée par le béton et l'au moins une bride de raccordement (30) ou le rail de guidage (42) étant disposé(e) au moins en partie à l'extérieur d'une surface de la structure porteuse.

11. Procédé de fabrication d'un système de robot comprenant un rail porteur (10) selon l'une quelconque des revendications 1 à 9, comprenant les caractéristiques suivantes :
a. au moins une bride de raccordement métallique inférieure (30), au moins une bride de raccordement métallique supérieure (40) et/ou au moins un rail de guidage (42) sont insérés dans une région extérieure dans un coffrage (200), au moins un tirant d'ancrage (44, 45) pour chaque bride de raccordement (30, 40) ou pour le rail de guidage (42) pénétrant dans un espace intérieur du coffrage (200), et
b. le coffrage (200) est ensuite coulé avec du béton de telle sorte que la structure porteuse (20) soit ainsi formée, les tirants d'ancrage (44, 45) étant ainsi enveloppés par le béton de telle sorte qu'ils agissent par engagement par correspondance de formes de manière à s'opposer à une séparation de la structure porteuse (20), et au moins une bride de raccordement (30, 40) ou le rail de guidage (42) étant disposé(e) au moins en partie à l'extérieur d'une surface de la structure porteuse (20).

12. Procédé de fabrication d'un système de robot (100) avec un rail porteur (10) selon l'une quelconque des revendications 1 à 9, comprenant les caractéristiques suivantes :
a. un corps en béton formant la structure porteuse (20) est coulé dans un coffrage (200), dans lequel des trous de passage pour l'armature intérieure ont déjà été maintenus libres lors de la coulée ou des trous de passage sont pratiqués après la coulée, et
b. l'armature intérieure (50) est ensuite enfoncée dans les trous de passage et relie les brides de raccordement (30, 40) montées au niveau des extrémités opposées ou au moins une bride de raccordement (30, 40) et un rail de guidage (42) .

13. Procédé selon l'une quelconque des revendications 10 à 12, comprenant au moins l'une des caractéristiques suivantes :
a. les surfaces extérieures de la structure porteuse (20) sont au moins en partie meulées et/ou sont pourvues d'un revêtement et/ou
b. le rail porteur pas encore fini, comprenant la structure porteuse (20) et
- l'armature intérieure (50) et au moins deux brides de raccordement (30, 40) ou au moins une bride de raccordement (30) et au moins un rail de guidage (42) ou
- au moins deux brides de raccordement (30, 40) ou au moins une bride de raccordement (30) et au moins un rail de guidage (42), qui sont à chaque fois pourvus de tirants d'ancrage,
est post-usiné par enlèvement de copeaux dans la région d'au moins une bride de raccordement (30, 40) ou du rail de guidage (42), en particulier au moyen d'un usinage par meulage et/ou d'un usinage par perçage.

14. Procédé selon l'une quelconque des revendications 10 à 13, comprenant au moins l'une des caractéristiques suivantes :
a. pendant la coulée de la structure porteuse (20) les brides de raccordement supérieures (40) ou les rails de guidage (42) sont orientés vers le bas et les brides de raccordement inférieures (30) sont orientées vers le haut.
